# EUROPÄISCHE PATENTANMELDUNG

(11) **EP 1 156 298 A2**
(43) Veröffentlichungstag der Anmeldung: **21.11.2001**
(21) Anmeldenummer: 01111738.9
(22) Anmeldetag: 15.05.2001
(51) Int. Cl.: G01B 11/00

(54) **Verfahren und Anordnung zur Erfassung dreidimensionaler Objekte**

(30) Priorität: 15.05.2000 DE 10023596
(71) Anmelder: Weimatic GmbH, 99438 Weimar-Legefeld (DE)
(72) Erfinder: Schmidt, Christoph, 98527 Suhl (DE)
(74) Vertreter: Liedtke, Klaus, Dr.

(57) **Zusammenfassung**

1. Verfahren und Anordnung zur Erfassung dreidimensionaler Objekte
2.1 Der Erfindung liegt die Aufgabe zugrunde, ein Verfahren und eine Vorrichtung anzugeben, mit denen neben der bildlichen Darstellung eines Messobjektes eine exakte Aussage über dessen räumliche Oberflächen und/oder Position möglich ist.
2.2 Erfindungsgemäß gelingt die Lösung der Aufgabe dadurch, dass die von der Bildverarbeitungseinheit ermittelten Kennwerte gemeinsam mit Messergebnissen, die von und einem den Abstand des Messobjektes zu einem Bezugspunkt messenden Abstandssensor einer Auswerteeinheit zugeführt werden, mit der eine dreidimensionale Kennwertdarstellung erfolgt.
2.3 Die Erfindung betrifft ein Verfahren und eine Anordnung zur Erfassung dreidimensionaler Objekte, bei dem die Objekte mit Hilfe einer Kamera zweidimensional abgebildet und daraus mit einer Bildverarbeitungseinheit Kennwerte abgeleitet werden.

## Beschreibung

Die Erfindung betrifft ein Verfahren und eine Anordnung zur Erfassung dreidimensionaler Objekte, bei dem die Objekte mit Hilfe einer Kamera zweidimensional abgebildet und daraus mit einer Bildverarbeitungseinheit Kennwerte abgeleitet werden.

Das Meßverfahren ist zur Erfassung der Lage und Orientierung von Gegenständen an denen Messungen bzw. Prüfungen in drei Dimensionen erfolgen müssen.

Dabei dient die bildliche Darstellung zur messtechnischen Auswertung, dem Erkennen von Fehlern oder der Prüfung auf Vorhandensein von definierten geometrischen Strukturen. Für eine Reihe von Messaufgaben ist es erforderlich, die Entfernung des Messobjektes von einem Sollpunkt zu kennen.

Für viele industrielle Aufgaben müssen zur Erfüllung der wachsenden Qualitätsanforderungen flexible Messungen realisiert werden. Hierzu ist es erforderlich, geometrische Merkmale an unterschiedlichen technischen Erzeugnissen, wie Oberflächenrauigkeiten oder Maß-, Form und Lageabweichungen zu ermitteln. Die konventionellen Messsysteme mit taktilen Antastungen werden diesen Erfordernissen nicht mehr gerecht. Deshalb wurde durch den Einsatz von Messrobotern versucht Messsysteme zu schaffen, die hohe Umrüstzeiten und manuellen Aufwand vermeiden. Bevorzugt werden hierbei Bildverarbeitungssysteme eingesetzt.

Im Stand der Technik sind verschiedene Vorrichtungen zur dreidimensionalen Erfassung von Messobjekten bekannt.

Bei den bisher angewendeten Verfahren zur Messung von dreidimensionalen Strukturen mit Hilfe von CCD-Kameras (Zeile oder Matrix) arbeitet die Kamera entweder als "Empfänger" in einem Triangulationssystem oder die Kamera wertet ein auf das Prüfobjekt projiziertes Linienmuster, welches aus ein oder mehreren Linien bestehen kann, aus.

Bei der Anwendung von Triangulationsverfahren mit Kameras sind in der Regel mehrere Bildaufnahmen notwendig, um eine Oberflächenstruktur bestimmen zu können. Die Bewertung der Oberfläche nach weiteren Merkmalen (Vollständigkeit, Musterkennung, Zahlen lesen,...) sind nicht oder nur in deutlich eingesschränktem Umfang möglich.

Beim Lichtsschnittverfahren ist die Ermittlung der Oberflächenstruktur zwar in wesentlich größerem Umfang möglich, für die Bewertung der Oberfläche gelten jedoch die gleichen Einschränkungen wie beim Triangulationsverfahren.

In DE 42 38 891 A1 ist ein Kamerasystem mit integrierter Entfernungsmesseinrichtung beschrieben, bei dem ein nach einem Triangulationsverfahren arbeitender Lasersensor so in ein Kamerasystem integriert ist, dass ein über eine spezielle optische Baugruppe vor dem Objektiv der Kamera eingekoppelter Messstrahl entlang der optischen Achse des Kamerasystems verläuft, so dass der Auftreffpunkt des Messstrahls auf dem Objekt unabhängig von der Objekt Entfernung ständig genau in der Mitte des Bildes abgebildet wird.
Nachteilig ist hierbei, dass die Abstandsmessung hierbei lediglich zur Definition des Abstandes der Kamera zum Prüfobjekt verwendet wird, um Messfehler in der zweidimensionalen Auswertung zu vermeiden. Eine Aussage über die dreidimensionale Beschaffenheit des Messobjekts und zu einem Bezugspunktabstand ist damit nicht möglich.

Der Erfindung liegt die Aufgabe zugrunde ein Verfahren und eine Vorrichtung der eingangs genannten Art anzugeben, mit denen neben der bildlichen Darstellung eines Messobjektes eine exakte Aussage über dessen räumliche Oberflächen und/oder Position möglich ist.

Erfindungsgemäß wird die Aufgabe mit einem Verfahren gelöst, welcher die in Anspruch 1 angegebenen Merkmale aufweist.

Vorteilhafte Ausgestaltungen sind in den Unteransprüchen angegeben.

Das erfindungsgemäße Verfahren ermittelt das dreidimensionale Messergebnis aus der zweidimensionalen Auswertung der auf das Prüfobjekt "schauenden" Kamera (z.B. Position eines Mittelpunktes; Koordinaten x,y eines Objektes; kreisförmige Oberseite eines Bolzens) und der Abstandsinformation; z-Koordinate; vom den Abstand messenden Sensor. Die notwendige Koordinatentransformation nimmt die Auswerteeinheit (z.B. SPS, IPC,...) Vor. Damit wird ein sehr flexibles Meßsystem geschaffen, welches eine komfortable Oberflächenbewertung mit der Ermittlung von dreidimensionalen Positions- oder Messwerten vereinigt.

Das erfindungsgemäße Verfahren ermöglicht mit Hilfe einer zweidimensionalen Kameraabbildung und einem den Abstand messenden Sensor ein dreidimensionale Messaufgabe. Es verwendet eine bildliche Darstellung des Messobjektes, mit dem eine Auswertung in zwei Dimensionen ermöglicht wird. Zur Erfassung der dritten Dimension, die durch die Höhe, die Tiefe, einen Abstand u.a. des Objektes charakterisiert ist, wird ein geeigneter Sensor eingesetzt, der den Abstand zwischen Befestigungsort des Sensors und einem festgelegten Punkt bzw. einer festgelegten Fläche ermittelt.

Die Erfindung wird im folgenden anhand eines Ausführungsbeispieles näher erläutert.

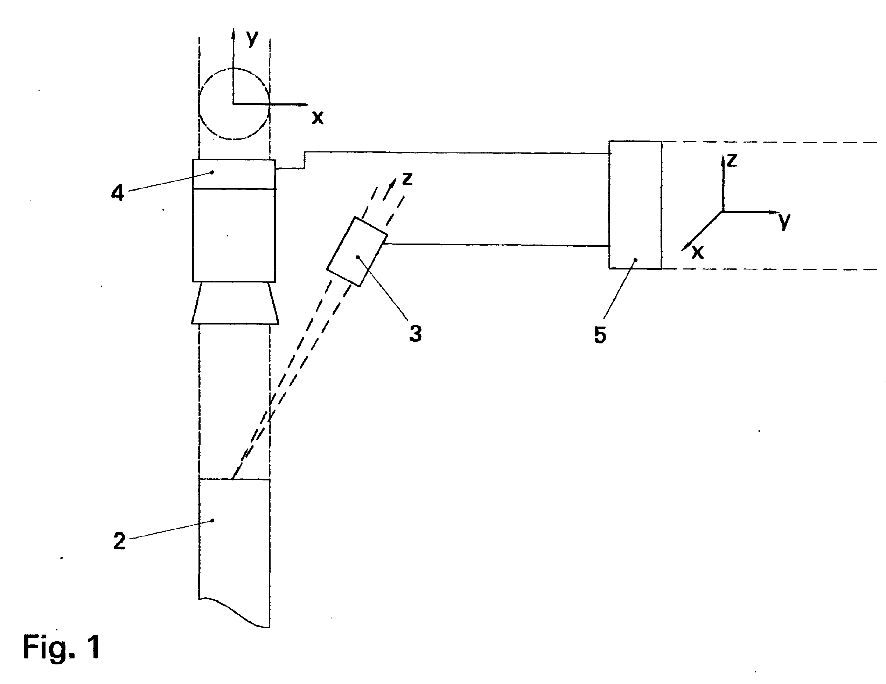

Dazu zeigt Figur 1 eine schematische Darstellung der Messanordnung.

Die Kamera 1 ist auf das Messobjekt 2 gerichtet. Die Erfassung der Messwerte von zwei Dimensionen des Messobjektes 2 erfolgt mit einer Bildverarbeitungseinheit. Die Bildverarbeitungseinheit besteht aus der Kamera 1 mit Objektiv und einer Bildauswerteeinheit 4. Im allgemeinen ist zur ausreichenden Ausleuchtung noch eine Beleuchtungseinrichtung, die mit der Kamera 1 gekoppelt ist, erforderlich. Die von der Bildauswerteeinheit 4 ermittelten Messwerte werden zur Auswertung einer programmierbaren elektronischen Auswerteeinheit 5 zugeführt. Die Bildauswerteeinheit 4 kann als separates Gerät, das mit der Kamera 1 über Messleitungen verbunden ist, ausgebildet sein. Es ist auch möglich, dass die Bildauswerteeinheit 4 eine gerätetechnische Einheit mit der Kamera 1 bildet.

Die Ermittlung der die dritte Dimension charakterisierenden Parameter, die durch die Bildverarbeitungseinheit nicht erfasst werden kann, erfolgt mit Hilfe eines den Abstand des Meßobjektes 2 zu einem festzulegenden Bezugspunkt ermittelnden Abstandssensors 3. Hierzu können sowohl berührende als auch berührungslos messende Sensoren 3 verwendet werden. Auch hierbei ist es möglich, dass die Sensoranordnung zur Ermittlung der dritten Dimension direkt mit der Kamera 1 verbunden ist oder sich in einem der jeweiligen Messaufgabe angepassten, geeignetem Abstand befindet. Durch die für jeden Einsatzfall flexible Positionierung von Kamera 1 und Abstandssensor 3 kann eine optimale Erfassung der Messwerte erreicht werden.
Der Start der Messung kann für das Kamerasystem und für den Abstandssensor 3 gleichzeitig oder nacheinander ausgelöst werden. Nachdem die Ergebnisse der Messungen der Bildverarbeitungseinheit 4 und des Abstandssensors 3 beide vorliegen, erfolgt die Weiterverarbeitung in einer Auswerteeinheit 5. Eine zweckmäßige Ausführung sieht vor, dass die Auswerteeinheit 5 Bestandteil der Bildverarbeitungseinheit ist. Sie kann aber auch ein von den beiden Messeinheiten unabhängiges Gerät darstellen.

Die Aufgabe der Auswerteeinheit 5 besteht im wesentlichen darin, die Messwerte beider Einheiten so zu bearbeiten, dass alle Messwerte in einem einheitlichen Koordinatensystem dargestellt und weiterverarbeitet werden können.
In dem Fall, dass die Position beider oder einer Messeinheit veränderbar sind (z.B. Befestigung an Manipulator oder Roboter) kann in der Auswerteeinheit die aktuelle Position der bewegten Messeinheit bei der Messwertermittlung berücksichtigt werden.

### BEZUGSZEICHENLISTE

- 1: Kamera
- 2: Messobjekt
- 3: Abstandssensor
- 4: Bildverarbeitungseinheit
- 5: Auswerteeinheit

## Patentansprüche

1. Verfahren zur Erfassung dreidimensionaler Objekte, bei dem die Objekte mit Hilfe einer Kamera (1) zweidimensional abgebildet und daraus mit einer Bildverarbeitungseinheit (4) Kennwerte abgeleitet werden, **dadurch gekennzeichnet, dass** die von der Bildverarbeitungseinheit (4) ermittelten Kennwerte gemeinsam mit Messergebnissen, die von und einem den Abstand des Messobjektes (2) zu einem Bezugspunkt messenden Abstandssensor (3) einer Auswerteeinheit (5) zugeführt werden, mit der eine dreidimensionale Kennwertdarstellung erfolgt.

2. Verfahren nach Anspruch 1, **dadurch gekennzeichnet, dass** die Abstandsmessung berührungslos erfolgt.

3. Anordnung zur Durchführung des Verfahrens nach einem der Ansprüche 1 oder 2, **dadurch gekennzeichnet, dass** ein eine elektronische Kamera (1) enthaltende Bildverarbeitungseinheit (4) mit einem Abstandssensor (3) in einem festem Abstand angeordnet sind und dass beide Einrichtungen Signalverarbeitungseinheiten zur Auswertung ihrer jeweiligen Messwerte enthalten, die mit einer Auswerteeinheit (5) gekoppelt ist.

4. Anordnung nach Anspruch 3, **dadurch gekennzeichnet, dass** als elektronische Kamera (1) eine digitale Matrixkamera verwendet wird.
